(19) Europäisches Patentamt
European Patent Office
Office européen des brevets

(11) Publication number : **0 473 327 A1**

(12) **EUROPEAN PATENT APPLICATION**

(21) Application number : **91307461.3**

(51) Int. Cl.$^5$ : **B01D 53/32**

(22) Date of filing : **13.08.91**

(30) Priority : **31.08.90 GB 9019218**

(43) Date of publication of application : **04.03.92 Bulletin 92/10**

(84) Designated Contracting States : **DE DK FR**

(71) Applicant : **UNITED KINGDOM ATOMIC ENERGY AUTHORITY
11 Charles II Street
London SW1Y 4QP (GB)**

(72) Inventor : **Goldsmith, Ann Louise
33 Louviers Road, Littlemoor
Weymouth, Dorset (GB)**
Inventor : **Holt, Nicolas Scowcroft
40 Church Street, Upwey
Weymouth, Dorset (GB)**

(74) Representative : **Mansfield, Peter Turquand et al
United Kingdom Atomic Energy Authority
Patents Branch B329 Harwell Laboratory
Oxfordshire, OX11 0RA (GB)**

(54) **Gas stream treatment.**

(57) Potential pollutants such as nitrogen oxides and organic halogen compounds are removed from a gas stream by passing it through two corona discharge units (14, 18) in series between which is a dehumidifier (16). The first corona discharge unit (14) operates in a wet mode, with a continuous supply of water, whereas the second corona discharge unit (18) operates dry.

EP 0 473 327 A1

Fig. 1.

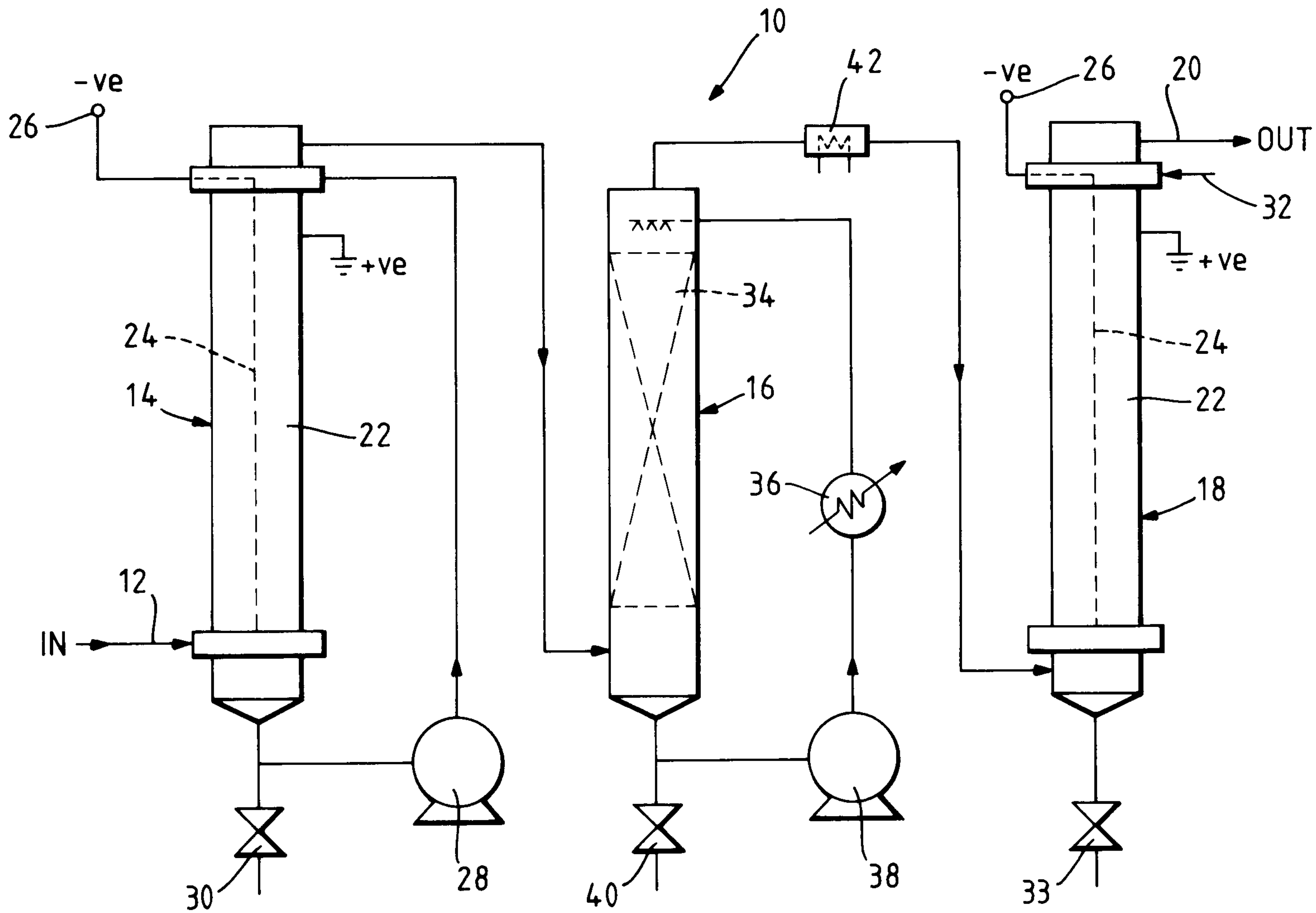

This invention relates to an apparatus and to a method for treating a gas stream, particularly but not exclusively for treating an off-gas stream which may include nitrogen oxides, iodine and organic halogen compounds such as methyl iodide, before it is discharged to the atmosphere.

A variety of methods are in use or have been proposed for treating effluent or off-gases so as to remove potential pollutants. For example wet or dry scrubbers may be used to remove sulphur dioxide and nitrogen dioxide, while cylones, electrostatic precipitators, or bag filters may be used to remove dust, soot, or other particulate matter. Nitrogen oxides and organic halogen compounds are however particularly difficult to remove, as they remain in the gas phase and are only slightly soluble in water. The use of electrical discharges to bring about chemical reactions and hence to enable such pollutants to be removed has been proposed; for example equipment using corona discharges in conjunction with an alkaline, aqueous wash liquid to remove nitrogen oxides from a waste gas stream is described in JP 51-151258 (Hitachi), while pulsed streamer corona discharges are described for a similar purpose in WO 87/02909 (Florida State University).

It has also been proposed to use a corona discharge to assist the removal of methyl iodide from a gas stream, as described in SU 1 088 767 A (Kolomeitsev et al), where the current density and the field strength of the discharge lie within specified limits. There is no suggestion that the presence of other gases might affect the process, and the results quoted are the same at 0.5 and at 95% relative humidity. The use of a corona discharge to remove methyl iodide from a gas stream is also described by D.F. Torgerson et al at the 15th DoE Nuclear Air Cleaning Conference (August 1978) (pages 437-444); they also report that water vapour does not affect the efficiency of the process, whereas nitrogen oxides significantly reduce the efficiency; the process is also said to be applicable to the removal of aromatic iodides such as iodobenzene.

According to the present invention there is provided an apparatus for treating a gas stream, the apparatus comprising means to subject the gas stream to a first corona discharge and to expose the gas stream to an aqueous scrubbing liquid either simultaneously with or immediately after the first corona discharge, means to remove humidity from the gas stream after it has flowed through the aforementioned means, and means to subject the dehumidified gas stream to a second corona discharge.

For efficient operation the gas stream preferably contains at least 10%, more preferably at least 20%, oxygen. The first corona discharge means is very effective at removing nitrogen oxides such as NO and $NO_2$ from the gas stream, as they react with ozone generated by the corona discharge from oxygen in the gas stream to form products such as $N_2O_5$ which are readily soluble in the aqueous scrubbing liquid. The scrubbing liquid might be water, or an alkaline solution for example of sodium hydroxide, and it might be sprayed as droplets or mist into the gas stream, or it might be arranged to flow continuously over surfaces of the apparatus exposed to the gas stream.

The humidity removing means might comprise means to cool the gas stream so that water vapour condenses, means to separate the condensed water from the gas stream, and means to warm the gas stream up again. The gas stream might be cooled by causing it to flow up a packed column down which a cooled liquid flows in counter-current. Most conveniently, the cooled liquid is water which is recirculated to the packed column via a refrigerator.

The gas stream reaching the second corona discharge contains little water vapour and little nitrogen oxides. On passage through the second corona discharge any organic halides are decomposed; for example in the case of methyl iodide a particulate material containing the iodine as oxides is deposited. Similarly molecular iodine is oxidised.

The present invention also provides a method for treating a gas stream comprising the successive steps of subjecting the gas stream to a first corona discharge and exposing the gas stream to an aqueous scrubbing liquid either simultaneously with or immediately after the first corona discharge, then removing humidity from the gas stream, and then subjecting the dehumidified gas stream to a second corona discharge.

The use of two successive corona discharges, the first associated with a scrubbing liquid and the second treating dehumidified gas, has been found to provide greatly improved decontamination of the gas stream, and enables a wider range of pollutants to be removed than can be achieved with a single corona discharge. The corona discharge of the invention may be a corona streamer discharge, or a corona glow discharge, and the discharge potential difference may be of either negative or positive polarity. A corona glow discharge occurs when a sufficiently large potential difference is applied between two spaced apart electrodes with a gas between them, if the electric field is sufficiently non-uniform. For example between parallel plate electrodes the field is uniform, and electrical breakdown occurs by sparking, whereas between a wire and a plate the field is non-uniform, being strongest near the wire, and breakdown occurs near the wire surface producing a uniform glow or corona discharge. If the wire is at a negative potential relative to the other electrode the corona is referred to as a negative corona. In such a discharge electrons are generated at the surface of the cathode and are accelerated by the field. Electrons collide with molecules either elastically or in elastically, and in the latter case the molecule may be excited (so as to emit the characteristic light) or be ionized. Ionization leads to the production of further free electrons so that an avalanche can occur, and the excited and ionized gas molecules may undergo chemical reactions. These processes only occur near the cathode, since the electrons in the weaker field region do not acquire sufficient energy, and instead combine with molecules to form negative ions. In contrast a corona streamer discharge is created by repeatedly applying pulses of a potential difference large enough to initiate sparking, but sufficiently brief that no spark occurs, for example 200 nanoseconds (both the requisite potential difference and the duration of the pulses depending upon the inter-electrode distance).

The invention will now be further described by way of example only, and with reference to the accompanying drawings in which:

Figure 1 shows a diagrammatic flow chart of a gas treatment apparatus;

Figure 2 shows graphically the experimentally determined variation of decontamination factor for methyl iodide with nitrogen oxide and water vapour with a corona discharge unit similar to that used in the apparatus of Figure 1.

Referring to Figure 1 there is shown a diagrammatic view of a gas treatment apparatus 10 for treating a gas stream which may contain nitrogen oxides and methyl iodide, but which is principally nitrogen and between about 10% and 20% oxygen. The gas stream enters the apparatus 10 through an inlet duct 12 and is caused to flow successively through a first corona discharge unit 14, then through a dehumidifier unit 16, and then a second corona discharge unit 18 before emerging through an outlet duct 20. Each corona discharge unit 14 and 18 consists of several parallel tubes 22 (in the Figure only one is shown) each of diameter 50 mm and of length 0.5 metre. Along the longitudinal axis of each tube 22 is a taut stainless steel wire 24 of diameter 0.3 mm, supported by insulators at each end of the tube 22. Each tube 22 is electrically earthed, and each wire 24 is electrically connected to the negative terminal 26 of a high voltage supply (e.g. 20 kV) so that a corona glow discharge occurs within each tube 22 when the supply is on.

The first corona discharge unit 14 also includes a pump 28 arranged to recirculate water from the base of the unit 14 to the top, the water flowing over a weir (not shown) at the upper end of the tubes 22 so that a film of water flows continuously over the inner surfaces of all the tubes 22. A valve 30 enables the water to be drained from the unit 14 and replaced at intervals. Means 32 are also provided to supply wash water to the upper end of the tubes 22 in the second corona discharge unit 18, and a valve 33 enables the wash water to be drained off, but this wash water is supplied only periodically to clean the electrodes and is not supplied while gas is flowing through the unit 18.

The dehumidifier unit 16 consists of a packed column 34 through which the gas is arranged to flow upwardly in counter-current to chilled water supplied by a refrigerator 36; the water is recirculated from the base of the column 34 by a pump 38 back to the refrigerator 36. The column 34 is also provided with a drain valve 40 so the water can be replaced. After passage through the packed column 34 the gas flow is passed through a heater unit 42.

In operation of the apparatus 10 the electrical supplies are activated so that there are corona glow discharges in each tube 22 of both the first and the second corona discharge units 14 and 18, and the gas stream is supplied to the duct 12 at such a flow rate that the gas takes between 5 and 20 seconds, preferably about 10 seconds, to flow through each discharge unit 14 and 18. In passing through the first unit 14 the nitrogen oxides such as NO are oxidised by reactive species generated by the corona to more soluble oxides which then dissolve in the water film flowing over the walls of the tubes 22. The nitrogen oxides may also be broken down into nitrogen and oxygen. The concentration of nitrogen oxides in the gas stream is hence considerably reduced. Desirably it is reduced to less than 100 parts per million by volume (vpm), preferably to less than 50 vpm.

The gas stream then passes through the dehumidifier unit 16, so its moisture content is considerably reduced, before passing through the second corona discharge unit 18. In this unit any iodine vapour or methyl iodide (or other organic iodides) are oxidised to form a solid iodine oxide ($I_4O_9$ or $I_2O_5$) which is deposited on the walls of the tubes 22 and on the wire 24. Periodically the gas flow through the unit 18 is stopped (the apparatus 10 might include two identical units 18 for use alternately), the power supply is switched off, and the iodine oxide deposits are washed off with the wash water.

Experimental measurements using a single corona discharge unit comprising a single tube 22 and a wire 24 have shown that decontamination factors (DF) for removing methyl iodide from a gas stream can be greater than 1000, depending on gas flow rates, tube 22 and wire 24 dimensions, and the concentrations of other gases, as well as on the electrical parameters. As shown graphically in Figure 2, to which reference is now made and which shows the results obtained with a single tube 22 of diameter 38 mm and of length 300 mm and a wire 24 of diameter 0.3 mm, the decontamination factor (DF) increases with the electrical current, and is greatest when the gas stream contains no water vapour or nitrogen oxides. Apart from the value obtained at the lowest current, the DF is reduced markedly by the presence of 100 vpm NO; and the observed DFs are still lower where the gas stream also contained 2% water vapour (that is about 90% of the saturated value at ambient temperature). Hence the apparatus of Figure 1 can be expected to remove methyl iodine very effectively, in passage of the gas stream through the second corona discharge unit 18, because the nitrogen oxides have been removed by the first corona discharge unit 14, and the humidity removed by the dehumidifier unit 16.

It will be appreciated that a gas treatment apparatus of the invention may differ in various ways from that described with reference to Figure 1. For example the number of tubes 22 must be chosen in accordance with the gas flow which is to be treated; the gas residence time in each corona discharge unit 14 and 18 should be long enough to ensure substantially complete reaction, the necessary time depending on the composition of the gas, and the nature of the corona discharge. The tubes 22 might be of a different length to that described above, for example 300 mm or 600 mm or even up to 1.5 m, and might be of a different diameter, for example 30 mm or 60 mm, or possibly up to 100 mm. The tubes 22 might be of non-circular cross-sectional shape, for example they might be hexagonal so as to fit more closely together without wasting space. The wires 24 might be of a different diameter or be replaced by rigid rods (not shown) of a greater width, which might be of for example square cross-section to provide the necessary small radii of curvature for discharge to occur (the potential difference needed for a given current increases as the radius of curvature increases). Other corona discharge electrode configurations, as used for electrostatic precipitators, such as wires between parallel plates, might be used instead of wires in tubes. It will also be appreciated that the water supplied to the first corona discharge unit might be replaced by a different aqueous liquid such as sodium hydroxide solution, and that instead of the weir arranged to provide a film of water the aqueous liquid might be sprayed as droplets or as a mist into the gas stream.

It will also be appreciated that the gas treatment apparatus 10 will also act as a conventional electrostatic precipitator to remove aerosols and particulate material from the gas stream. The gas stream might contain a wide range of potential pollutants: the gas stream might be an off-gas stream from a nuclear fuel reprocessing plant, or it might be an off-gas stream from an incinerator. It is expected that other organic gases would also be destroyed by the corona discharges.

## Claims

1. An apparatus for treating a gas stream, the apparatus comprising means (14) to subject the gas stream to a first corona discharge and to expose the gas stream to an aqueous scrubbing liquid either simultaneously with or immediately after the first corona discharge, and characterised by also comprising means (16) to remove humidity from the gas stream after it has flowed through the aforementioned means, and means (18) to subject the dehumidified gas stream to a second corona discharge.

2. An apparatus as claimed in Claim 1 wherein the means to expose the gas stream to the scrubbing liquid comprises means (28) to cause the liquid to flow continuously over surfaces (22) of the apparatus exposed to the gas stream.

3. An apparatus as claimed in Claim 1 or Claim 2 wherein the humidity removing means (16) comprises means to cool the gas stream (34, 36, 38) so that water vapour condenses and means to separate the condensed water from the gas stream.

4. An apparatus as claimed in Claim 3 also comprising means (42) to warm the dehumidified gas stream before it is subjected to the second corona discharge.

5. An apparatus as claimed in Claim 3 or Claim 4 wherein the gas stream cooling means comprises a packed column (34), and means (36, 38) to cause a cooled liquid to flow along the column (34) in countercurrent to the gas flow.

6. An apparatus as claimed in any one of the preceding Claims wherein one or both of the corona discharges are corona glow discharges.

7. An apparatus as claimed in any one of Claims 1 to 5 wherein one or both of the corona discharges are corona streamer discharges.

8. A method for treating a gas stream comprising the steps of subjecting the gas stream to a first corona discharge and exposing the gas stream to an aqueous scrubbing liquid either simultaneously with or immediately after the first corona discharge, and characterised by comprising the further successive steps of then removing humidity from the gas stream, and then subjecting the dehumidified gas stream to a second corona discharge.

Fig. 1.

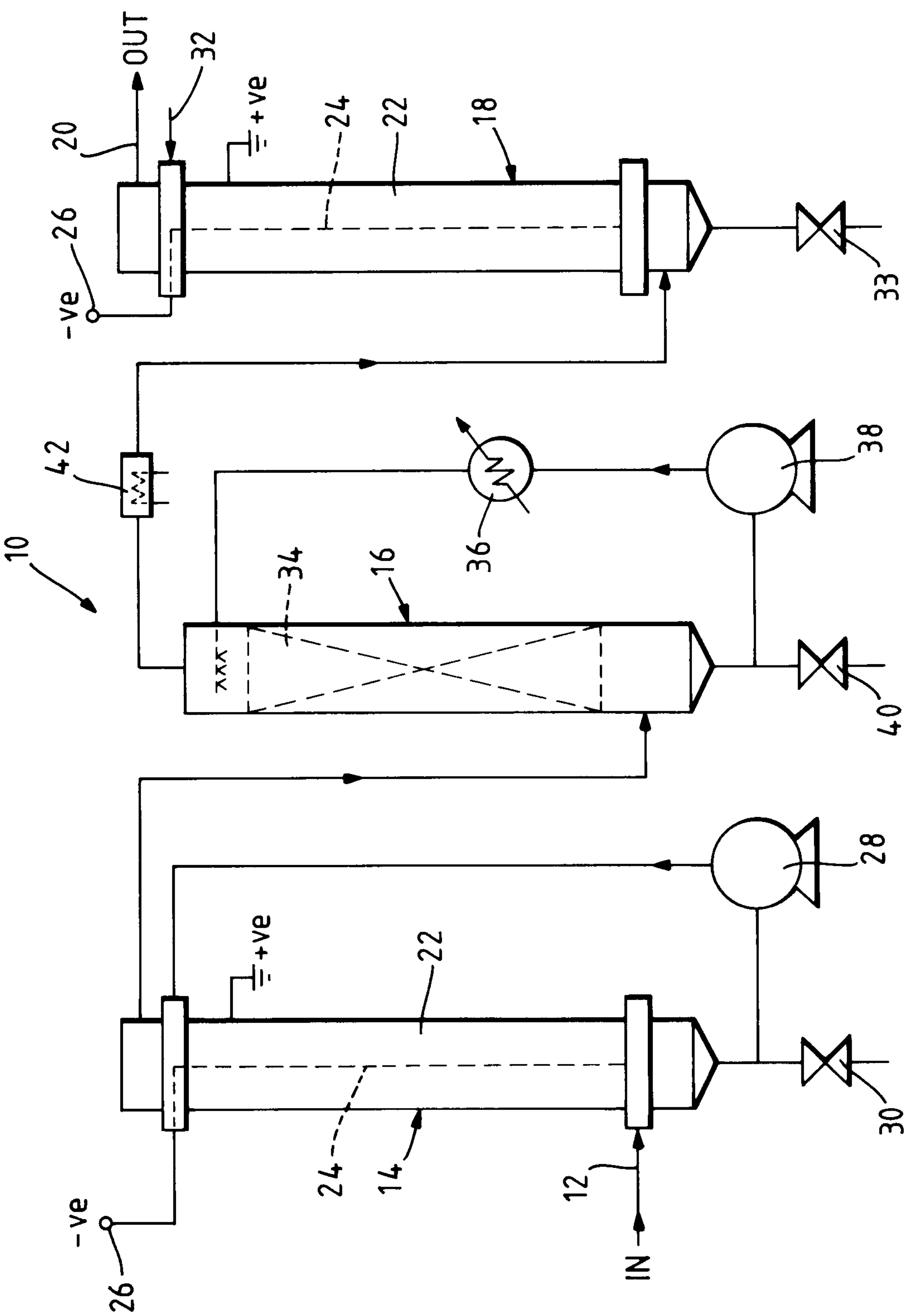

Fig. 2.

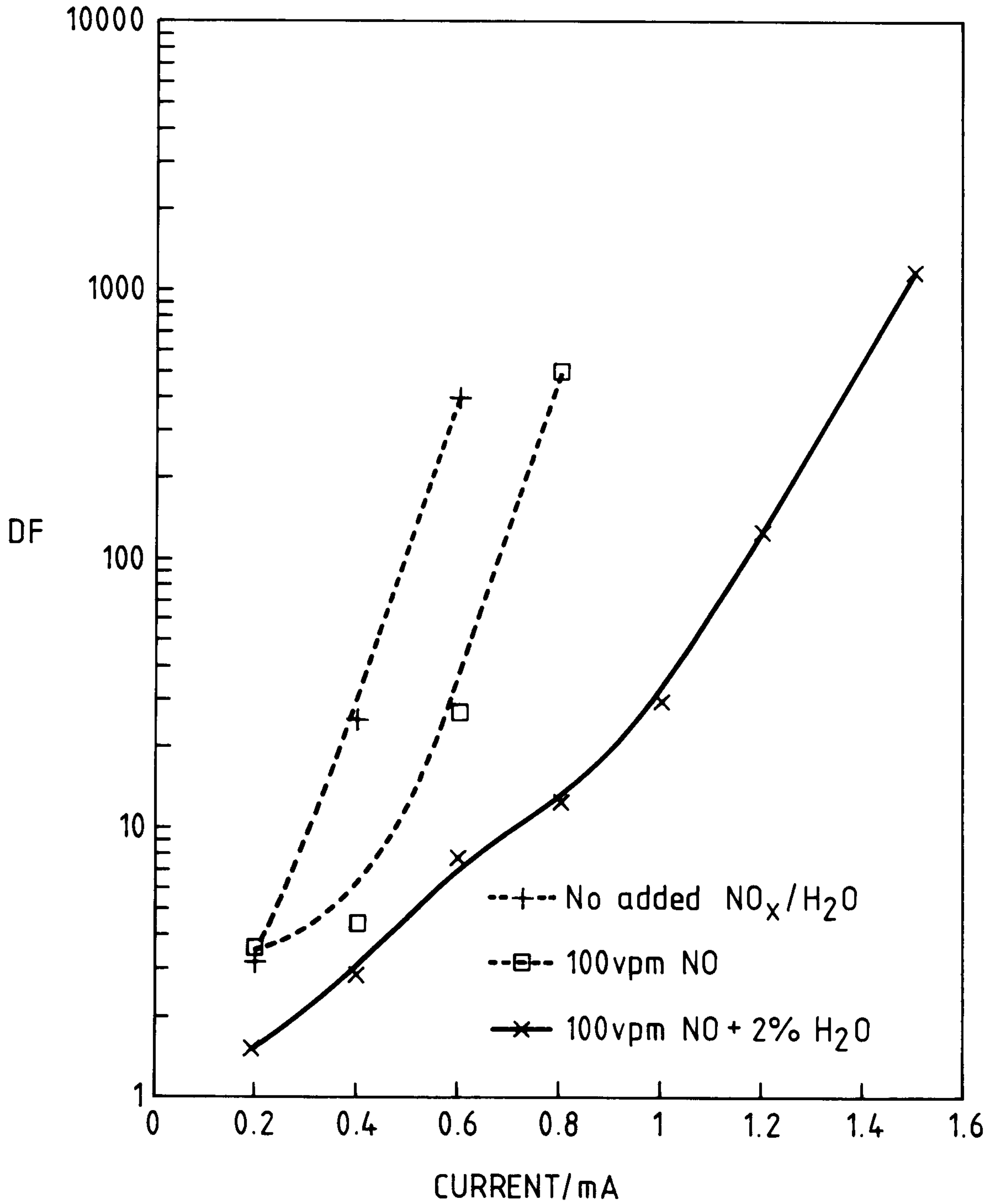
10000
1000
100
10
1
DF
0
0.2
0.4
0.6
0.8
1
1.2
1.4
1.6
CURRENT/mA
No added $NO_x/H_2O$
100vpm NO
100vpm NO + 2% $H_2O$

European Patent Office

# EUROPEAN SEARCH REPORT

Application Number

EP 91 30 7461

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,A | DE-A-3 907 703 (BADENWERK AG)<br>* claims 1-4,9; figure 1 *<br>--- | 1,5,8 | B01D53/32 |
| A | PATENT ABSTRACTS OF JAPAN<br>vol. 2, no. 81 (C-16)28 June 1978<br>& JP-A-53 040 678 ( SHIN NIPPON SEITETSU K.K. )<br>13 April 1978<br>* abstract *<br>----- | 1,4,8 | |

TECHNICAL FIELDS SEARCHED (Int. Cl.5 )

B01D
B01J
B03C

The present search report has been drawn up for all claims

| Place of search | Date of completion of the search | Examiner |
|---|---|---|
| THE HAGUE | 29 NOVEMBER 1991 | CUBAS ALCARAZ J.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)